# DEMANDE DE BREVET EUROPEEN

(11) **EP 1 357 652 A1**
(43) Date de publication de la demande: **29.10.2003**
(21) Numéro de dépôt: 03360050.3
(22) Date de dépôt: 17.04.2003
(51) Int. Cl.: H02G 3/04

(54) **Goulotte munie d'au moins un moyen de rigidification transversale**

(30) Priorité: 23.04.2002 FR 0205088
(71) Demandeur: Tehalit Production (Société à Responsabilité Limitée), 67240 Bischwiller (FR)
(72) Inventeur: Schnurr, Richard, 66957 Vinningen (DE); Pfeifer, Christoph, 67707 Schopp (DE)
(74) Mandataire: Nuss, Pierre

(57) **Abrégé**

La présente invention a pour objet une goulotte (1) présentant une section transversale sensiblement en U et dont l'extrémité libre des ailes présente un rebord intérieur (2) muni d'une rainure (3) d'accrochage pour l'encliquetage d'un bord correspondant d'un couvercle, ladite rainure d'accrochage (3) déterminant un décrochage (4) par rapport au rebord correspondant, et qui est munie d'au moins un moyen de rigidification transversale (5) destiné à assurer un maintien parfait des bords de l'ouverture de la goulotte (1) en cas de montage d'un appareillage (6).

Goulotte caractérisée en ce que chaque moyen de rigidification transversale (5) est essentiellement constitué sous forme d'un élément s'étendant entre les rebords de la goulotte et pourvu sur deux côtés opposés respectivement, d'une part, d'un dispositif (7) d'accrochage par le dessous à un décrochage (4) correspondant à une rainure longitudinale (3) de l'un des rebords de la goulotte (1) et, d'autre part, d'un dispositif (8) d'accrochage et de serrage sur le décrochage (4) de l'autre rebord de la goulotte (1).

L'invention est plus particulièrement applicable dans le domaine des dispositifs de distribution électrique, en particulier des goulottes d'alimentation.

## Description

La présente invention concerne le domaine des dispositifs de distribution électrique, en particulier des goulottes d'alimentation et a pour objet une goulotte munie d'au moins un moyen de rigidification transversale empêchant une extraction non voulue d'appareillages fixés dans ladite goulotte.

Il existe actuellement de nombreuses goulottes d'alimentation électrique recevant sur leur face frontale des appareillages électriques sous forme de prises, d'interrupteurs ou autres, qui sont fixés dans lesdites goulottes par l'intermédiaire de pattes élastiques munies de dispositifs d'accrochage coopérant avec la partie inférieure de l'ouverture délimitée entre les bords correspondants desdites goulottes.

Cette ouverture des goulottes correspond à un intervalle longitudinal nécessaire pour la mise en place de différents câblages et est fermée au moyen d'un couvercle spécifique à chaque goulotte, ce couvercle réalisant simultanément le maintien en écartement des bords des goulottes. A cet effet, les goulottes sont généralement munies de part et d'autre de l'ouverture déterminée entre leurs ailes verticales, de moyens d'encliquetage de dispositifs de fixation prévus sur les bords longitudinaux des couvercles.

Ces moyens d'encliquetage sont habituellement constitués sous forme de rainures longitudinales destinées à coopérer avec des nervures de forme correspondante prévues sur les bords longitudinaux des couvercles. De préférence, la coopération entre nervures et rainures est du type à encliquetage, c'est-à-dire s'effectue par coopération de forme avec légère déformation lors de la mise en place et du démontage.

La fixation même de ces couvercles par clippage dans l'ouverture ménagée longitudinalement dans la face frontale des goulottes est donc, par nature, facilement démontable, mais suffisante pour assurer la fonction principale des couvercles.

Or, au niveau de la fixation des appareillages, les goulottes ne sont plus maintenues en écartement par le ou les couvercles, de sorte que la fixation des appareillages par l'intermédiaire de leurs pattes élastiques coopérant avec la face inférieure des rebords de fixation des couvercles devient plus aléatoire, une traction relativement faible sur la partie supérieure d'un appareillage pouvant avoir pour effet un arrachement de cet appareillage hors de la goulotte, ce par déformation simultanée de la goulotte et éventuellement des pattes de fixation des appareillages.

Une telle déformation de la goulotte est due à l'absence, sur une longueur correspondant à celle occupée par l'appareillage, de tout moyen de maintien en écartement des bords de la goulotte.

Pour obvier à ces inconvénients, il a été proposé différentes réalisations de moyens complémentaires destinés à assurer un maintien parfait en écartement des bords des goulottes ce, en particulier, par FR-A-2 756 431 et par DE-A-2 017 232 des moyens de maintien en écartement constant des bords de goulotte. Ainsi, DE-A-2 017 232 décrit un moyen consistant en une barrette transversale munie de dispositifs d'accrochage dans des ouvertures correspondantes des rebords d'une goulotte, alors que FR-A-2 756 431 décrit un accessoire pouvant être fixé entre les rebords de l'ouverture d'une goulotte, cet accessoire coopérant avec ladite goulotte, d'une part, par des nervures s'engageant dans les rainures correspondantes des rebords de la goulotte et, d'autre part, par l'intermédiaire de pattes élastiquement déformables pourvues à leurs extrémités de crochets s'engageant sous les rebords délimitant l'ouverture et donc sous les nervures de réception de la rainure ainsi que des bords des couvercles. Pour parfaire et assurer la fixation de cet accessoire, il est prévu, en outre, la mise en oeuvre de vis fixées entre cuir et chair, ces vis assurant simultanément un maintien contre l'arrachement, ainsi qu'une impossibilité de déplacement longitudinal de l'accessoire dans l'ouverture de la goulotte.

Ces dispositifs connus présentent un certain nombre d'inconvénients liés à leur mise en oeuvre, soit, en ce qui concerne DE-A-2 017 232 du fait de la nécessité de prévoir des ouvertures dans les rebords et donc que la mise en place du dispositif n'est possible qu'au niveau de ces ouvertures, soit pour ce qui est de FR-A-2 756 431, du fait d'un montage et d'un démontage relativement complexes et longs de l'accessoire.

En outre, une telle réalisation de moyens d'écartement entraîne un prix de revient de ces derniers relativement élevé, en sus des frais relatifs à leur mise en oeuvre.

Enfin, on connaît, par EP-A-1 059 718 un dispositif de rigidification, dont l'accrochage aux bords de l'ouverture d'une goulotte s'effectue par le dessus et par coopération avec les bords des décrochages formant les rebords de l'ouverture de la goulotte, en particulier avec la paroi correspondante de la rainure d'accrochage d'un couvercle. Une telle réalisation peut également présenter l'inconvénient d'un éventuel déclipsage de l'un des bords du dispositif.

La présente invention a pour but de pallier ces inconvénients en proposant une goulotte d'alimentation électrique munie d'au moins un moyen de rigidification transversale empêchant une extraction non voulue d'appareillages fixés dans ladite goulotte, ce moyen étant de construction, de fabrication et de mise en oeuvre très simple et assurant un maintien parfait des bords de l'ouverture de la goulotte.

A cet effet, la goulotte conforme à l'invention, qui présente une section transversale sensiblement en U et dont l'extrémité libre des ailes présente un rebord intérieur muni d'une rainure d'accrochage pour l'encliquetage d'un bord correspondant d'un couvercle, ladite rainure d'accrochage déterminant un décrochage par rapport au rebord correspondant, et qui est munie d'au moins un moyen de rigidification transversale destiné à assurer un maintien parfait des bords de l'ouverture de la goulotte en cas de montage d'un appareillage, est caractérisée en ce que chaque moyen de rigidification transversale est essentiellement constitué sous forme d'un élément s'étendant entre les rebords de la goulotte et pourvu sur deux côtés opposés respectivement, d'une part, d'un dispositif d'accrochage par le dessous à un décrochage correspondant à une rainure longitudinale de l'un des rebords de la goulotte et, d'autre part, d'un dispositif d'accrochage et de serrage sur le décrochage de l'autre rebord de la goulotte.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'une goulotte conforme à l'invention ;
la figure 2 est une vue en coupe transversale de la goulotte suivant la figure 1 au niveau du moyen de rigidification transversale, et
la figure 3 est une vue en perspective, à plus grande échelle, du moyen de rigidification transversale.

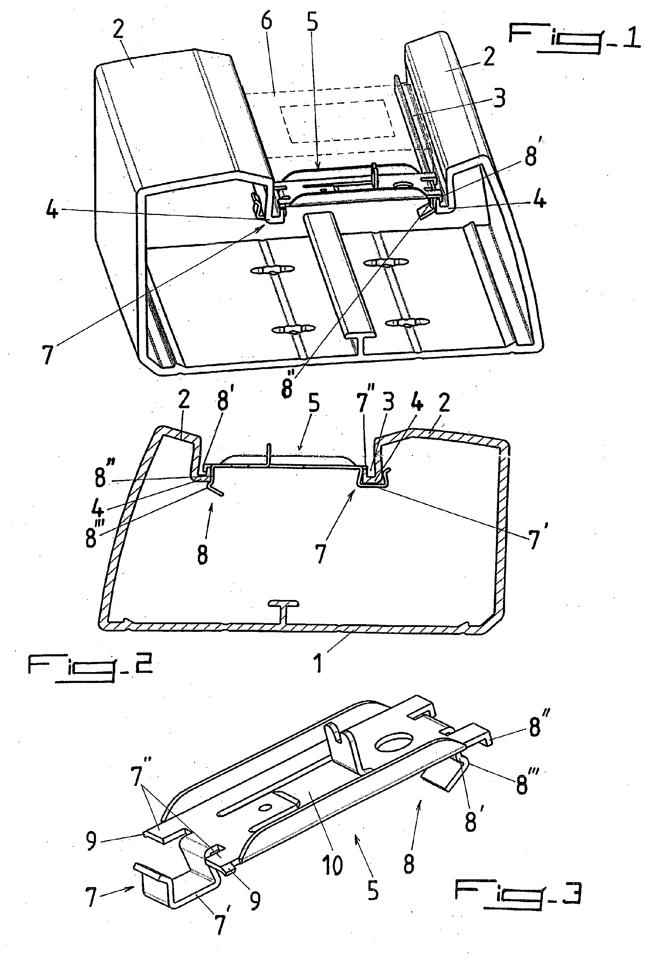

La figure 1 du dessin annexé représente une goulotte 1 présentant une section transversale sensiblement en U et dont l'extrémité libre des ailes est pourvue d'un rebord intérieur 2 muni d'une rainure 3 d'accrochage pour l'encliquetage d'un bord correspondant d'un couvercle, ladite rainure d'accrochage déterminant un décrochage 4 par rapport au rebord correspondant 2. Cette goulotte 1 est munie d'au moins un moyen de rigidification transversale 5 destiné à assurer un maintien parfait des bords de l'ouverture de la goulotte 1, en cas de montage d'un appareillage 6.

Conformément à l'invention et comme le montrent les figures 1 à 3 des dessins annexés, chaque moyen de rigidification transversale 5 est essentiellement constitué sous forme d'un élément s'étendant entre les rebords de la goulotte et pourvu sur deux côtés opposés respectivement, d'une part, d'un dispositif 7 d'accrochage par le dessous à un décrochage 4 correspondant à une rainure longitudinale de l'un des rebords de la goulotte 1 et, d'autre part, d'un dispositif d'accrochage et de serrage 8 sur le décrochage 4 de l'autre rebord de la goulotte 1.

Le dispositif 7 d'accrochage par le dessous à un décrochage 4 correspondant à une rainure longitudinale de l'un des rebords de la goulotte 1 est avantageusement constitué par un élément 7' d'enserrage par le dessous du décrochage 4 à section transversale sensiblement en U, dont les extrémités libres des ailes se resserrent, et par au moins une partie 7" prolongeant l'élément transversal formant le moyen de rigidification légèrement au-dessus de l'ouverture délimitée entre les ailes de l'élément 7', pour s'appuyer sur la paroi du décrochage 4 délimitant la rainure 3 tournée vers l'intérieur de l'ouverture de la goulotte 1 (figure 1 à 3). Ainsi, ce dispositif 7 réalise un serrage d'une extrémité du moyen de rigidification transversale 5. A cet effet, l'élément 7' est monté sur le décrochage 4 correspondant en étant d'abord placé à la verticale avec son ouverture en face de la paroi verticale délimitant la rainure 3 du décrochage 4, la partie 7" venant s'insérer dans ladite rainure, puis l'ensemble est basculé avec appui de la partie 7" sur l'arête supérieure interne de la rainure 3 de manière à faire tourner l'élément 7' autour du décrochage 4 pour serrer ledit décrochage 4 entre ses ailes en U, lorsque le moyen 5 atteint une position horizontale.

Le dispositif d'accrochage et de serrage 8 sur le décrochage 4 de l'autre rebord de la goulotte 1 est constitué par au moins une patte 8' s'étendant sensiblement à angle droit par rapport à l'élément transversal formant le moyen de rigidification 5, cette patte 8' étant destinée à s'insérer dans la nervure correspondante du décrochage 4, et par un élément d'encliquetage 8" s'étendant parallèlement à la patte 8' et pourvu d'une saillie 8''' dirigée vers la patte 8', cette saillie présentant un écartement avec l'élément transversal formant le moyen de rigidification 5 correspondant sensiblement à la hauteur du décrochage 4, de manière à s'appuyer sous ce dernier par encliquetage, en position de service du dispositif d'accrochage et de serrage 8. Ce mode de réalisation du dispositif 8 permet d'assurer, d'une part, un assujettissement du décrochage 4 correspondant par rapport au décrochage 4 de l'autre aile de la goulotte 1 coopérant avec le dispositif 7, contre un écartement des ailes de la goulotte 1 et, d'autre part, de maintenir le moyen 5 de rigidification en position de service par encliquetage de l'élément 8" avec sa saillie 8''' sur le décrochage 4, par appui de ladite saillie 8''' sous ledit décrochage 4.

Selon une autre caractéristique de l'invention et comme le montre plus particulièrement la figure 3 des dessins annexés, la ou les parties 7" s'étendant au-dessus de la paroi du décrochage 4 délimitant la rainure 3 tournée vers l'intérieur de l'ouverture de la goulotte 1 peuvent avantageusement être pourvues chacune d'au moins une dent 9 en saillie en direction du fond de l'élément 7' d'enserrage, pour s'appuyer à force sur le champ de cette paroi. Ainsi, lorsque le moyen 5 arrive dans sa position de service, dans laquelle il assure un assujettissement des ailes de la goulotte 1 l'une par rapport à l'autre, ledit moyen 5 est simultanément assujetti contre un déplaçement longitudinal entre les bords ainsi reliés de la goulotte 1, la ou les dents 9 pénétrant dans la matière de la paroi.

En conséquence, après mise en place du moyen 5 dans l'ouverture d'une goulotte, à côté d'un appareillage 6, ledit appareillage est, d'une part, maintenu contre un déplacement longitudinal dans la goulotte 1 par arrivée en butée contre le moyen 5 et, d'autre part, est empêché d'être extrait par inadvertance, suite à une modification de la largeur de l'ouverture entre les ailes de la goulotte 1, du fait du blocage desdites ailes contre tout mouvement d'écartement.

Conformément à une autre caractéristique de l'invention, le moyen 5 est avantageusement réalisé en un matériau métallique estampé, de préférence une tôle d'acier.

Enfin, comme le montrent les figures 1 à 3 des dessins annexés, dans le cas d'une réalisation du moyen 5 en un matériau métallique, l'élément transversal formant le moyen de rigidification est avantageusement muni, près du dispositif d'accrochage et de serrage 8, d'un orifice 10 de passage d'un outil d'actionnement de la patte 8'. Un tel outil d'actionnement peut, notamment, être un tournevis ou autre élément de relativement faible section permettant, par une action de levier contre l'extrémité libre de la patte 8', de pousser ce dernier contre la paroi correspondante du décrochage 4, afin de parfaire l'appui de la saillie 8''' sous ledit décrochage 4 et ainsi de parfaire l'encliquetage.

En outre, de manière connue, le moyen 5 peut être pourvu d'un cache, non représenté, destiné à assurer une continuité entre le couvercle de goulotte et l'appareillage installé 6.

Grâce à l'invention, il est possible de réaliser un moyen de rigidification transversale pour une goulotte de distribution électrique qui permet d'empêcher une extraction non voulue d'appareillages fixés dans ladite goulotte, par réalisation d'une liaison rigide parfaitement fiable entre les bords de l'ouverture de la goulotte.

En outre, ce moyen de rigidification est de constitution et de fabrication particulièrement simples, de sorte qu'il peut être réalisé à un faible coût.

Enfin, le moyen de rigidification peut être monté et démonté particulièrement rapidement sans mise en oeuvre d'aucun outillage spécifique, par une simple suite d'opérations manuelles consistant en l'enserrage d'un décrochage par un côté du moyen puis en l'encliquetage de l'autre côté de ce moyen avec le décrochage de l'aile opposée de la goulotte.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Goulotte (1) présentant une section transversale sensiblement en U et dont l'extrémité libre des ailes présente un rebord intérieur (2) muni d'une rainure (3) d'accrochage pour l'encliquetage d'un bord correspondant d'un couvercle, ladite rainure d'accrochage (3) déterminant un décrochage (4) par rapport au rebord correspondant, et qui est munie d'au moins un moyen de rigidification transversale (5) destiné à assurer un maintien parfait des bords de l'ouverture de la goulotte (1) en cas de montage d'un appareillage (6), **caractérisée en ce que** chaque moyen de rigidification transversale (5) est essentiellement constitué sous forme d'un élément s'étendant entre les rebords de la goulotte et pourvu sur deux côtés opposés respectivement, d'une part, d'un dispositif (7) d'accrochage par le dessous à un décrochage (4) correspondant à une rainure longitudinale (3) de l'un des rebords de la goulotte (1) et, d'autre part, d'un dispositif (8) d'accrochage et de serrage sur le décrochage (4) de l'autre rebord de la goulotte (1).

2. Goulotte, suivant la revendication 1, **caractérisée en ce que** le dispositif (7) d'accrochage par le dessous à un décrochage (4) correspondant à une rainure longitudinale de l'un des rebords de la goulotte (1) est constitué par un élément (7') d'enserrage par le dessous du décrochage (4) à section transversale sensiblement en U, dont les extrémités libres des ailes se resserrent, et par au moins une partie (7") prolongeant l'élément transversal formant le moyen de rigidification légèrement au-dessus de l'ouverture délimitée entre les ailes de l'élément (7'), pour s'appuyer sur la paroi du décrochage (4) délimitant la rainure (3) tournée vers l'intérieur de l'ouverture de la goulotte (1).

3. Goulotte, suivant la revendication 1, **caractérisée en ce que** le dispositif d'accrochage et de serrage (8) sur le décrochage (4) de l'autre rebord de la goulotte (1) est constitué par au moins une patte (8') s'étendant sensiblement à angle droit par rapport à l'élément transversal formant le moyen de rigidification (5), cette patte (8') étant destinée à s'insérer dans la nervure correspondante du décrochage (4), et par un élément d'encliquetage (8") s'étendant parallèlement à la patte (8') et pourvu d'une saillie (8''') dirigée vers la patte (8'), cette saillie présentant un écartement avec l'élément transversal formant le moyen de rigidification (5) correspondant sensiblement à la hauteur du décrochage (4), de manière à s'appuyer sous ce dernier par encliquetage, en position de service du dispositif d'accrochage et de serrage (8).

4. Goulotte, suivant la revendication 2, **caractérisée en ce que** la ou les parties (7") s'étendant au-dessus de la paroi du décrochage (4) délimitant la rainure (3) tournée vers l'intérieur de l'ouverture de la goulotte (1) peuvent être pourvues chacune d'au moins une dent (9) en saillie en direction du fond de l'élément (7') d'enserrage, pour s'appuyer à force sur le champ de cette paroi.

5. Goulotte, suivant la revendication 1, **caractérisée en ce que** le moyen (5) est réalisé en un matériau métallique estampé.

6. Goulotte, suivant la revendication 1, **caractérisée en ce que** le moyen (5) est réalisé en une tôle d'acier.

7. Goulotte, suivant l'une quelconque des revendications 1, 5 et 6, **caractérisée en ce que** l'élément transversal formant le moyen de rigidification est muni, près du dispositif d'accrochage et de serrage (8), d'un orifice (10) de passage d'un outil d'actionnement de l'élément (8").
